# EUROPEAN PATENT APPLICATION

(11) **EP 4 265 549 A1**
(43) Date of publication of application: **25.10.2023**
(21) Application number: 22169004.3
(22) Date of filing: 20.04.2022
(51) Int. Cl.: B65H 49/08, B65H 49/20, B65H 75/16, B65H 75/32

(54) **DISPENSER FOR A CORD FOR SEALING A THREADED PIPEWORK**

(71) Applicant: Henkel AG & Co. KGaA, 40589 Düsseldorf (DE)
(72) Inventor: COX, Peter, D18A8P4 Dublin (IE); RAYNER, Stephen Michael, 40552 Düsseldorf (DE); MURPHY, Ronan, D07P6V6 Dublin (IE); BOURKE, James, Dublin (IE)
(74) Representative: Wagner Albiger & Partner Patentanwälte mbB

(57) **Abstract**

The invention relates to a dispenser (1) for a cord, preferably for a cord for sealing a threaded pipework, comprising a hollow body (10) for receiving the cord, a cover part (30) being arranged on a top edge (13) of the hollow body (10) and having an opening (41) through which the thread can be removed from the hollow body (10), and a cap (60) which is connected to the cover part (30) so as to be pivotable about a pivot axis (40) and, in a closed position, covers the opening (41). The dispenser (1) is characterized in that the cap (60) has a protrusion (65) which, in the closed position of the cap (60), engages in the opening (41), so that the cord can be clamped between the protrusion (65) and opening rim (42).

## Description

The invention relates to a dispenser for a cord, in particular for a cord for sealing a threaded pipework.

From EP 0 975 545 B1 a dispenser with a cup-shaped hollow body for receiving the cord and with a lid member arranged at a top edge of the hollow body is known. The lid member has a small opening through which the cord is guided. When pulled, the cord guided through the opening can be taken from the hollow body. In an embodiment of EP 0 975 545 B1, the dispenser has a cap that is pivotally connected to the lid member about a pivot axis and covers the opening in a closed position.

With the opened cap, the cord can be pulled out of the hollow body and wound around the thread of a pipe section, for example. To do this, the installer can hold the dispenser in one hand and grasp the free end of the cord guided through the opening with the other hand and fix it to the thread with the thumb. The cord is then wound around the thread several times by a circular swiveling motion of the dispenser. During this circular pivoting motion, the cord can get caught on the unfolded cap and make it difficult to seal the thread. It is true that EP 0 975 545 B1 alternatively also discloses a dispenser with a screw cap that can be completely separated from the cover part so that the cap does not impede the winding of the cord onto the thread. However, the screw cap completely separated from the hollow body can be got lost.

Once the cord has been wound onto the thread, the cord is cut off so that a new free end of the cord results. The cap is now placed in the closed position to cover the opening and thus provide a certain seal between the hollow body and the environment. The dispenser can thus be placed on a shelf or taken to a new location. However, there is a risk that when the dispenser is transported, the free end of the cord will slip through the opening into the hollow body due to vibrations associated with transportation. However, the dispenser can no longer be used if the free end of the cord has fallen into the hollow body. It may be possible to take away the lid member from the hollow body to remove the free end from the hollow body and place it back through the opening in the lid member. However, this is awkward and makes the dispenser more difficult to handle.

The invention is therefore based on the object of providing a dispenser for a cord which is easy to handle and enables the cord to be wound onto an thread or the like easily.

The object underlying the invention is solved with the combination of features according to claim 1. Embodiments of the invention can be taken from the subclaims to claim 1.

According to the invention, the cap has a protrusion which, in the closed position of the cap, engages in the opening so that the cord can be clamped or pinched between the protrusion and an opening rim. In this case, the protrusion lies within the opening rim and preferably also rests against it. Between the opening rim and the protrusion is the cord, which is clamped by the contact of the edge and the protrusion.

A small gap can also be provided between the edge and the protrusion, whereby the gap should be smaller than the cross-section of the cord so that the cord is also securely clamped between the protrusion and the opening rim. By clamping the cord, it is prevented from inadvertently slipping down through the opening and into the hollow body. The invention thus ensures that when the cap has been opened, a free end of the cord protrudes from the opening and can be safely grasped by the user of the dispenser.

In one embodiment, the opening rim is circular. The protrusion can be designed to be essentially rotationally symmetrical so that, when arranged coaxially, it is in contact over the entire circumference of the rim or the gap between the rim and the protrusion is constant in the circumferential direction. In this case, it is irrelevant at which point, viewed in the circumferential direction of the opening, the cord is located between the rim and the protrusion. Preferably, the protrusion is cylindrical or hollow cylindrical in shape, with a circumferential surface of the cylindrical protrusion abutting the opening rim. A diameter of the cylindrical protrusion may be 3 to 7 mm, preferably 4 to 6 mm. An axial length of the protrusion may be 1 to 3 mm, preferably 1,5 to 2,5 mm.

The protrusion can have a locking nose on an outer side. In the case of a cylindrical protrusion, this locking nose can be designed as a circumferential ring. When the protrusion is inserted into the opening when the cap is closed, the interaction of the locking nose and the opening rim creates a locking connection that holds the protrusion securely in the opening of the lid member. In the closed position of the cap, the locking nose engages behind the opening rim. Seen in the axial direction of the protrusion, the protrusion has a profile due to the locking nose, which the cord must essentially follow and is thus held more securely between the opening rim and the protrusion.

The protrusion may be integrally formed on a lower side of a cover plate of the cap. In this regard, the protrusion may have a free end that engages the opening when the cap has been placed in the closed position. The other end of the protrusion is provided on the lower side of the cover plate and is adapted to be connected with the cover plate.

In one embodiment, the hollow body is cup-shaped and has a base, wherein a longitudinal axis of the hollow body extends from the base toward the top edge. A cross-section of the hollow body may be circular, although angular hollow bodies are also conceivable. Along the axial length, the cross-section of the hollow body can vary. For example, constrictions or grip recesses may be provided to better grip or hold the dispenser. Preferably, the hollow body is dimensioned such that it can be easily grasped with one hand. In one embodiment, the hollow body is cylindrical and has a diameter of 40 to 50 mm. A height of the cylinder (distance from base to top edge) may be 60 to 100 mm. A volume of the hollow body may be 100 to 200 ml.

In one embodiment, it is provided that in an open end position, the cap does not extend beyond the top edge of the hollow body in a plane transverse to the longitudinal axis. This means that in the open end position, the cap lies within a virtual cylinder whose base corresponds to the top edge of the hollow body and whose longitudinal axis coincides with the longitudinal axis of the hollow body. By lying within the virtual cylinder, the cap does not form any protruding edges or corners on which the cord can get caught when, for example, the dispenser is guided around a thread in a circular motion for winding the cord onto it.

The lid member can comprise at leat a first hinge element which cooperates with at least one second hinge element of the cap. In the assembled state, the first hinge element and the second hinge element define the pivot axis about which the cap can be pivoted relative to the lid member. Both the lid member and the cap are preferably one-piece injection molded parts made of plastic.

The cap and lid member may include a locking means that provides a locking force to hold the cap in the open end position or near the open end position. This locking force allows the cap to remain in the open end position even if the orientation of the dispenser is changed when the cord is applied to the thread, such as when the dispenser is tilted sideways or rotated 180° so that the top edge is facing down and the base of the hollow body is facing up. Thus, the cap cannot inadvertently tilt out of the open end position and thereby obstruct the removal of the cord from the dispenser.

The lid member may have a lower surface, an upper surface, and a step-shaped transition between the lower surface and the upper surface. Here, the lower surface may lie in a plane that is aligned parallel to a plane in which the upper surface lies. A small angle of inclination between 0 and 20° may also be provided between the planes.

In the embodiment in which the hollow body is formed as a cup with a base, if the dispenser is placed with the base on a horizontal base, the lower surface and/or the upper surface may be inclined to the horizontal. An angle of inclination to the horizontal may be in a range of 5 to 15°. In the case of a lid member that is circular in cross-section or plan view, the step-shaped transition may extend along a diagonal of the circular cross-section, the upper surface and the lower surface each covering approximately a semicircle (the diagonal thereby intersecting the center of the circular cross-section). In the region of the step-shaped transition, preferably parallel to the longitudinal extension of the transition, the pivot axis is provided about which the cap can be moved relative to the lid member.

The opening for the cord may be provided, possibly slightly raised, in the upper surface, and the cap can lie below the plane of the upper surface in the open end position. The cap thus lies in a spatial region bounded by the lower surface and the upper surface of the lid portion. Thus, in the plane of the upper surface, the cap does not represent an obstacle for the cord, which emerges from the opening and can be guided from there in all directions that lie in the plane of the upper surface or above the plane of the upper surface. This simplifies the handling of the cord.

The lid member may include a cutting device for the cord. In one embodiment, the cutting device is located next to the opening on the upper surface.

The invention is explained in more detail with reference to an example of an embodiment shown in the figures. It is shown in:
- Figure 1: a dispenser according to the invention in a perspective view (Figure 1A) and in a side view (Figure 1B);
- Figure 2: in different views a lid member of the dispenser of figure 1 (figures 2A to 2D);
- Figure 3: in different views a cap of the dispenser of figure 1 (figures 3A to 3E).
- Figure 4: a section along line IV-IV of Figure 3E;
- Figure 5: sections along the V-V line in Figure 2B and an enlarged detail (Figure 5C) of Figure 5B; and
- Figure 6: in different views a cutting device of the dispenser.

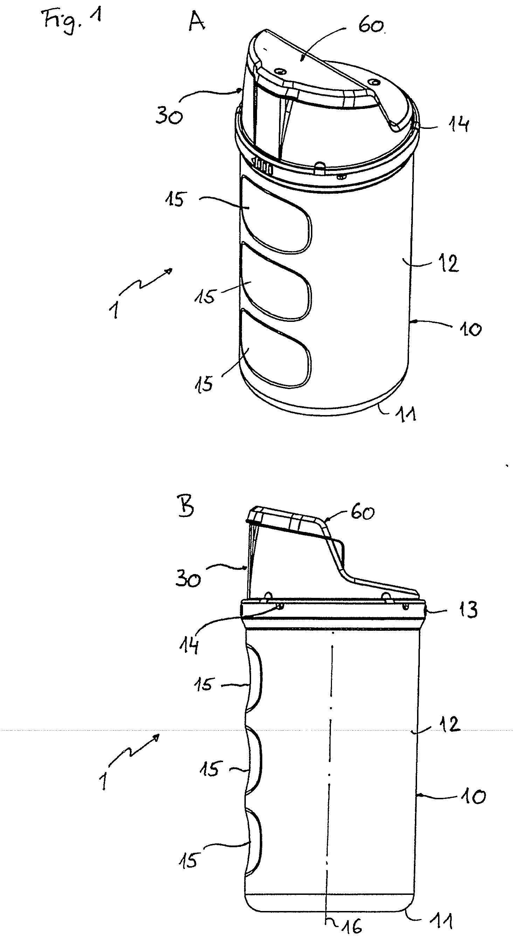

Figure 1 shows a dispenser, designated in its entirety as 1. Figure 1A shows the dispenser 1 in a perspective view. Figure 1B represents a side view of the dispenser 1. The dispenser 1 comprises a hollow body 10, a lid member 30, and a cap 60. The lid member 30 and the cap 60 are described in detail below.

The hollow body 10 is cup-shaped and has a base 11 and a circular side wall 12. The hollow body 10 can also be understood as a hollow cylinder, with the side wall 12 constituting the shell surface and a front end of the cylinder being closed. At an end facing away from the base 11, the base body 10 is open and has a top edge 13 that surrounds an opening of the hollow body 10. The top opening of the hollow body 10 is covered by the lid member 30. The top edge 13 is used to receive the lid member 30, and also has fastening means for fastening the lid member 30 to the hollow body 10. For example, the fastening means may comprise small indentations 14 directed radially inwardly as part of a bayonet fastener. The embodiment shown in Figure 1 has four indentations or projections 14 spaced circumferentially from adjacent indentations at an angle of 90°.

Figure 1 shows the cap 60 in a closed position. The cap 60 is movably attached to the lid member 30 and can be pivoted to at least one open position. In this position, a cord may be removed from the hollow body 10. The cord may be, for example, a cord for sealing a thread of a pipework. The cord can be coated, for instance with silicone.

Three recessed grips 15 are formed in the side wall 12 to improve the grip of the dispenser 1. The three grip recesses 15 are arranged one above the other, i.e. they are arranged along a central or longitudinal axis 16. The hollow body 10 can thus be easily gripped with a human hand. Viewed in the circumferential direction, the three recessed grips extend approximately in an angular section of 60°.

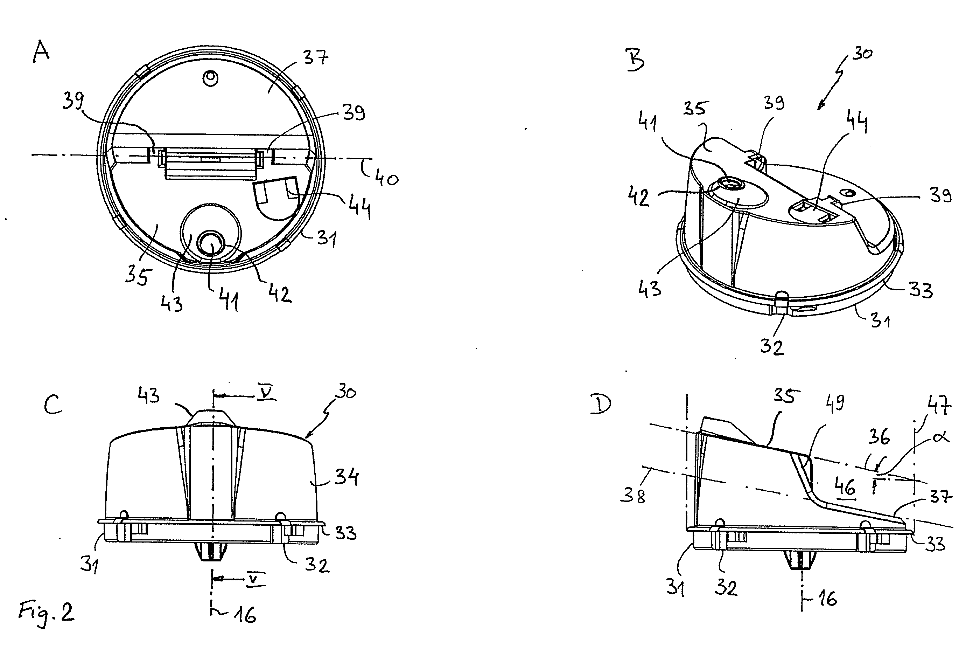

Figure 2 shows the lid member 30 in various views without the other parts of the dispenser 1. Figure 2A shows the lid member 30 from above. Figure 2B is a perspective view of the lid member 30. Figures 2C and 2D are two different side views of the lid member 30.

The cover part 30 has a circular lower edge 31, which can be inserted into the top edge 13 of the hollow body 10. The lower edge 31 has circumferentially distributed pockets 32 for the indentations 14 of the hollow body 10. The pockets 32 of the lid member 30 and the indentations 14 of the hollow body 10 form the bayonet connection already mentioned above. To secure the lid member 30 to the hollow body 10, the lid member 30 is inserted with its lower edge 31 along the longitudinal axis 16 of the hollow body 10 into the top edge 14 of the hollow body 10. This vertical movement, which ends by abutment of a projecting edge 33 of the lid member 30 against the top edge 13 of the hollow body 10, is followed by a small rotational movement of a few degrees in the circumferential direction (about 5 to 15°) to close the bayonet connection. In addition to the bayonet closure, other closures are also conceivable for securing the lid member to the hollow body 10 (for example, screw closure). However, the bayonet lock has the advantage that a very precise alignment of the lid member 30, as seen in the circumferential direction, to the hollow body 10 is possible.

A socket 34 extends vertically upwards from the lower edge 31 and the projecting edge 33, its height varying in the circumferential direction. Thus, in a first angular section of approximately 180°, the socket has an approximately equal height. In this angular section, the skirt 34 is covered by an upper surface 35. In this case, the upper surface 36 lies in a plane 36 which is slightly inclined to the lower edge 31 or to the circumferential edge 33. An angle of inclination α is 5 to 10°.

In a second angular section also of approximately 180°, the height of the skirt 34 is significantly reduced compared to the first angular section. In the second angular section, the socket 34 is covered by a lower surface 37. The lower surface 37 lies in a plane 38 which is parallel to the plane 36 in which the upper surface 35 lies. A transition area 49 extending substantially in a vertical direction connects the upper surface 35 to the lower surface 37.

In the transition area 49, two spaced-apart first hinge elements 39 are provided which define a pivot axis 40 (see Figure 2 A) about which the cap 60 can be pivoted relative to the lid member 30. An opening 41 is provided on the upper surface 35, which is bounded by a circular rim 42. Through this opening 41, the cord can be removed from the hollow body 10 and the cap portion 30 placed thereon. The rim 42 rests on a small, approximately cone-shaped circular elevation 43, the center of the opening 41 and the center of the elevation 43 being offset from each other. A cutting device 44 is further provided on the upper surface 35. By means of this cutting device 44, a section of the cord which has already been wound around a thread, for example, can be separated from the rest of the cord still in the hollow body. Thus, a new free end of the cord (not shown) is created, which, however, still protrudes from the opening 41.

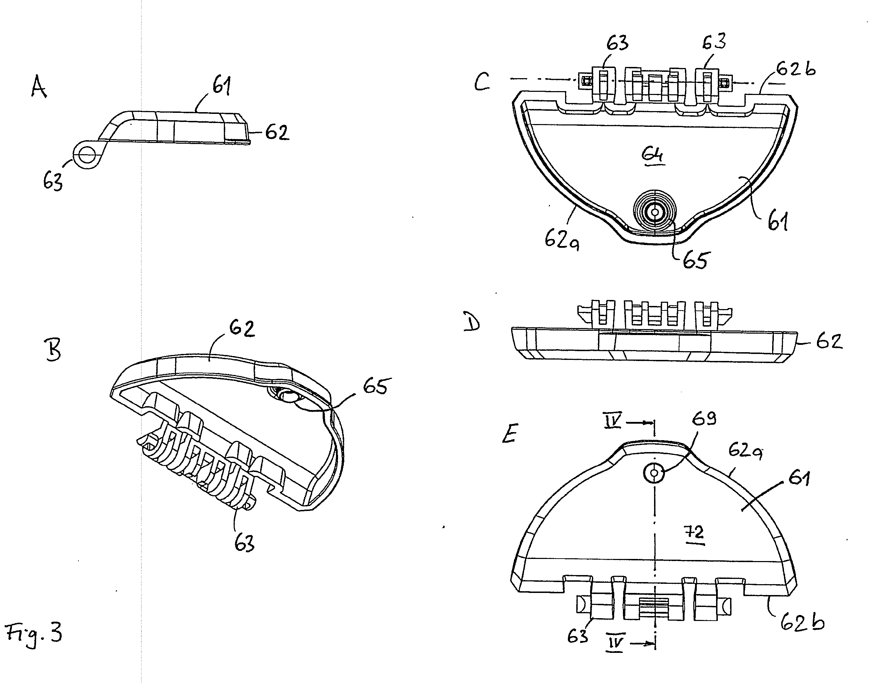

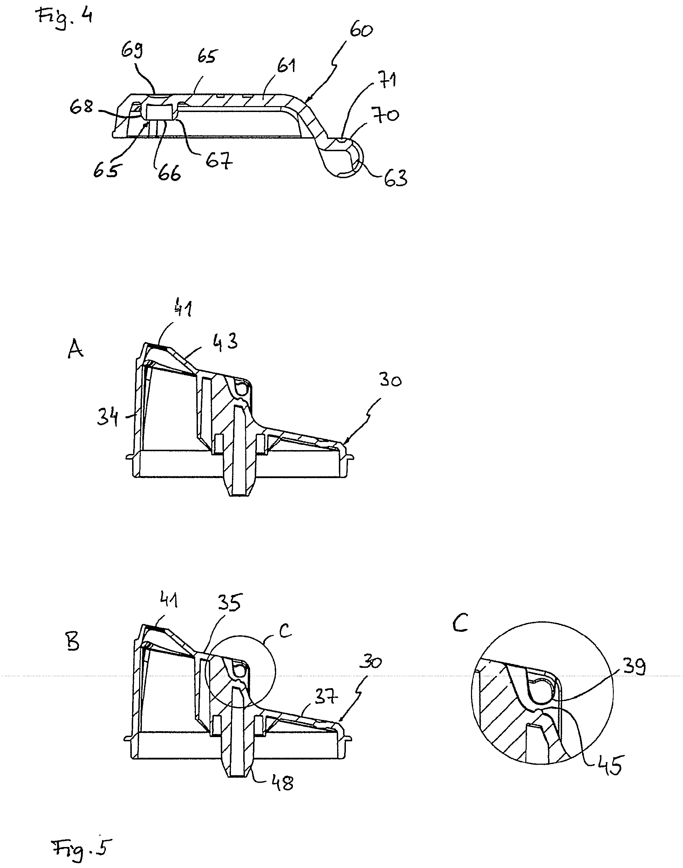

Figures 3 and 4 show the cap 60 in a stand-alone position. Figure 3C shows cap 60 from below, while Figure 3E shows cap 60 from above. Figures 3A and 3D are different side views. Figure 4 is a cutaway view along line IV-IV in Figure 3E. Figure 3B is an perspective view of the cap from below.

The cap 60 has a flat cover plate 61, which is adjoined by a circumferential cap edge 62. The cap edge 62 and the cover plate 61 are at right angles to each other. An edge between the flat cover plate 61 and the circumferential cap rim 62 is beveled by a circumferential chamfer.

The basic shape of the cover plate 61 corresponds approximately to a circular segment with an angular section of 180°. Accordingly, the circumferential cap edge 62 can be divided into a section 62a, which approximately replicates the circular arc, and a section 62b, which corresponds to the chord of the circular segment. Second hinge elements 63 are formed on the section 62b, which together with the first hinge elements 39 of the lid member 30 form a pivot hinge that captively connects the cap 60 to the lid member 30.

A cylindrical protrusion 65 is formed on a lower side 64 of the cover plate 61, which projects into the opening 41 of the cover part 30 when the cap 60 is in the closed position (see Figure 1). As can be seen in particular from Figure 4, the protrusion 65 has the shape of a short hollow cylinder. At a free end 66, the protrusion 65 has a bevel 67 through which the protrusion 65 can be more easily inserted into the opening 41 when the cap 60 is closed. A circumferential locking nose 68 is provided on an outer surface of the peripheral surface of the protrusion 65, which locking nose 68 engages behind the edge 42 of the opening 41 when the cap 60 is in the closed position. This holds the cap 60 securely in the closed position. Between the outside of the protrusion 65 and the edge 42 of the opening 41, the cord passing through the opening 41 is pinched when the cap 60 is pivoted from an open position to the closed position. By clamping the cord, the free end of the cord is prevented from slipping into the hollow body 1 due to vibrations or the like, for example, during transportation of the dispenser 1.

On an upper surface 65, the cap plate 61 has a small recess 69 above the protrusion 65 due to manufacturing, since the cap 60 is an injection molded plastic part. In particular, it can be seen from Figure 4 that the hinge member 63 includes a first protruding locking means 70 which, with a second protruding locking means 45 of the hinge member 39 (see Figures 5A to 5C), generate a locking force by which the cap is held in an open end position. A locking recess 71 is formed adjacent the first protruding locking means 70. In the open end position, the second projecting locking means 45 is located in this locking recess 71 and thus defines the open end position. Starting with the closed position shown in Figure 1, the cap must be pivoted by approx. 180° about the pivot axis 40 in order to reach this end position.

In this open end position, the cap 60 is located in a spatial region 46 bounded by the plane 36 of the upper surface 35, the plane 38 of the lower surface 37, the transition area 49 and the lateral surface of a virtual cylinder, which is indicated in the figure 2D by the reference sign 47. When the cap 60 is in the spatial region 46, it does not constitute corners or edges that protrude radially beyond the hollow body 1 or the protruding edge 33 and vertically (parallel to longitudinal axis 16) beyond the plane 36 of the upper surface. Thus, the risk is minimized that during unwinding the cord gets caught on the opened cap 60 and thus impedes the application of the cord.

The lid member 30 further forms a bearing pin 48 directed downward and coaxial with the central axis 16. The bearing pin 48, together with a bearing pin on the base 11 of the hollow body 10 not shown here, forms a rotatable bearing for the bobbin around which the cord is wound in the hollow body 1. The axis of rotation of this bearing coincides with the center axis.

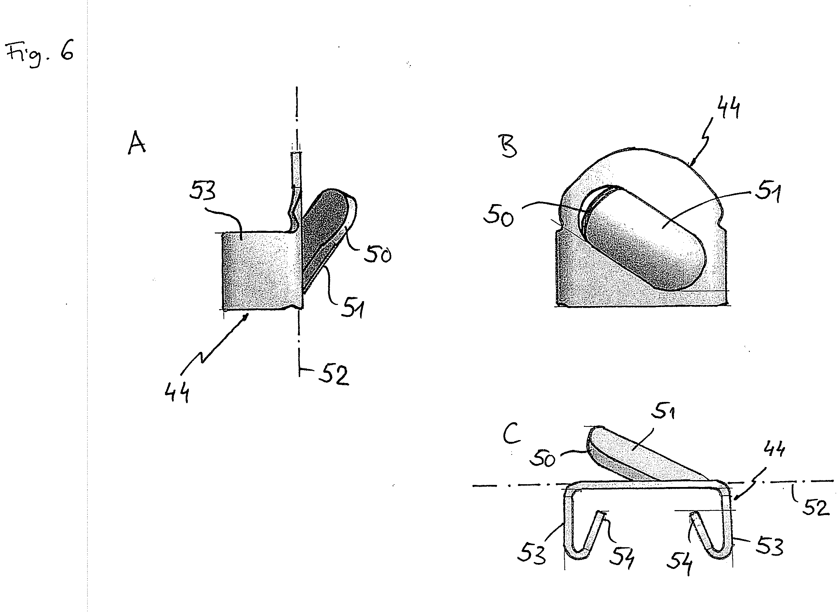

Figure 6 shows an embodiment of the cutting device 44 in various views (Figures 6A, 6B and 6C. The cutting device 44 of Figure 6 can be manufactured from a flat piece of sheet metal. A sharp-edged edge 50 is formed by a tongue-shaped punching 51, which is inclined at an angle of about 30° to a main plane 52 of the cutting device 44. In the use position of the cutting device, the main plane 52 lies parallel in the upper surface 35 of the lid part 30.

The cutting device 44 comprises two retaining tabs 53 which are beveled at right angles to the main plane 52. The free ends 54 of each retaining tab 53 are bent in the direction of the main plane 52 and form an abutment, so that the cutting device 44 is fixedly fastened to the upper surface 35 of the lid member 30.

### List of reference signs:

- 1: dispenser
- 10: hollow body
- 11: base
- 12: sidewall
- 13: top edge
- 14: indentation
- 15: handle recess
- 16: longitudinal axis / center axis
- 30: lid member
- 31: lower edge
- 32: pocket
- 33: protruding edge
- 34: socket
- 35: upper surface
- 36: plane
- 37: lower surface
- 38: plane
- 39: first hinge element
- 40: rotary axis / axis of rotation
- 41: opening
- 42: opening rim
- 43: elevation
- 44: cutting device
- 45: locking means
- 46: spatial area
- 47: virtual cylinder
- 48: bearing pin
- 49: transition area
- 50: edge
- 51: punching
- 52: main plane
- 53: tab
- 54: free end
- 60: cap
- 61: cover plate
- 62: cap edge (62a, 62b)
- 63: second hinge element
- 64: lower side
- 65: protrusion
- 66: free end
- 67: bevel
- 68: locking nose
- 69: recess
- 70: locking means
- 71: locking recess
- 72: upper side

## Claims

1. Dispenser (1) for a cord, preferably for a cord for sealing a threaded pipework, comprising a hollow body (10) for receiving the cord, a cover part (30) being arranged on a top edge (13) of the hollow body (10) and having an opening (41) through which the thread can be removed from the hollow body (10), and a cap (60) which is connected to the cover part (30) so as to be pivotable about a pivot axis (40) and, in a closed position, covers the opening (41), **characterized in that** the cap (60) has a protrusion (65) which, in the closed position of the cap (60), engages in the opening (41), so that the cord can be clamped between the protrusion (65) and opening rim (42).

2. Dispenser (1) according to claim 1, **characterized in that** the opening rim (42) is circular and the protrusion (65) is substantially rotationally symmetrical.

3. Dispenser (1) according to claim 1 or 2, **characterized in that** the protrusion (65) has a locking nose (68) on an outer side.

4. The dispenser (1) according to any one of claims 1 to 3, **characterized in that** the protrusion (65) is integrally formed on a lower side (64) of a cover plate (61) of the cap (60).

5. A dispenser (1) according to any one of claims 1 to 4, **characterized in that** the hollow body (10) is cup-shaped and has a base (11), wherein a longitudinal axis (16) of the hollow body (10) extends from the base (11) toward the top edge (13).

6. Dispenser (1) according to claim 5, **characterized in that** in an open end position the cap (60) does not protrude beyond the top edge (13) in a plane transverse to the longitudinal axis (16).

7. A dispenser (1) according to any one of claims 1 to 6, **characterized in that** the cap member (30) comprises at least a first hinge element (39) and that the cap (60) comprises at least a second hinge element (63), wherein in the assembled state the first hinge element (39) and the second hinge element (63) define the pivot axis (40).

8. A dispenser (1) according to claim 6 and any one of claims 1 to 5 and 7, **characterized in that** the cap (60) and the lid member (30) comprise locking means (45, 70) providing a locking force to hold the cap (60) in or near the open end position.

9. A dispenser (1) according to any one of claims 1 to 7, **characterized in that** the cap member (30) comprises a lower surface (37), an upper surface (35) and a step-shaped transition area (49) between the lower surface (37) and the upper surface (35), wherein the opening (41) for the cord is provided on the upper surface (35) or in the vicinity thereof, and wherein the cap (60) in the opened end position is arranged below the plane (36) of the upper surface (35).

10. Dispenser (1) according to any one of claims 1 to 8, **characterized in that** the lid member (30) comprises a cutting device (44) for the cord.

11. Dispenser (1) according to claim 9 and 10, **characterized in that** the cutting device (44) is arranged next to the opening (41) on the upper surface (35).
